# EUROPEAN PATENT SPECIFICATION

(11) **EP 4 169 988 B1**
(45) Date of publication and mention of the grant of the patent: **01.04.2026**
(21) Application number: 21826243.4
(22) Date of filing: 17.06.2021
(51) Int. Cl.: C09D 5/25, C09D 161/10, C09D 163/00, B32B 15/092, H01F 1/18, C23C 22/00, C23C 26/00, H01F 27/245, H02K 1/04, C08G 59/62, C08L 61/06, C22C 38/02, C22C 38/06, C22C 38/04, H01B 3/40, H01F 3/02, H01F 41/00

(54) **COATING COMPOSITION FOR ELECTRICAL STEEL SHEET, ELECTRICAL STEEL SHEET, LAMINATED CORE AND ROTARY ELECTRIC MACHINE**
BESCHICHTUNGSZUSAMMENSETZUNG FÜR ELEKTROSTAHLBLECH, ELEKTROSTAHLBLECH, LAMINIERTER KERN UND ROTIERENDE ELEKTRISCHE MASCHINE
COMPOSITION DE REVÊTEMENT POUR TÔLE D'ACIER ÉLECTRIQUE, TÔLE D'ACIER ÉLECTRIQUE, NOYAU STRATIFIÉ ET MACHINE ÉLECTRIQUE ROTATIVE

(30) Priority: 17.06.2020 JP 2020104248
(43) Date of publication of application: 26.04.2023
(73) Proprietor: NIPPON STEEL CORPORATION, Chiyoda-ku Tokyo 100-8071 (JP)
(72) Inventor: TAKEDA Kazutoshi, Tokyo 100-8071 (JP); TAKATANI Shinsuke, Tokyo 100-8071 (JP); FUKUCHI Minako, Tokyo 100-8071 (JP); TANAKA Ichiro, Tokyo 100-8071 (JP)
(74) Representative: Vossius & Partner Patentanwälte Rechtsanwälte mbB
(86) International application number: PCT/JP2021/023029
(87) International publication number: WO 2021/256533

(56) References cited:
- EP-A2- 0 232 021
- WO-A1-2015/029828
- JP-A- 2000 336 487
- JP-A- 2020 186 415
- JP-A- H0 824 779
- JP-A- H11 193 476
- US-A- 5 049 596
- US-A1- 2019 225 758

## Description

### [Technical Field]

The present invention relates to a coating composition for an electrical steel sheet, an electrical steel sheet, a laminated core and a rotary electric machine. Priority is claimed on Japanese Patent Application No. 2020-104248, filed June 17, 2020.

### [Background Art]

As cores (cores) that are used for rotary electric machines, laminated cores in which a plurality of electrical steel sheets are joined and laminated together are known. As a method for joining electrical steel sheets, swaging or welding is known. However, during swaging or welding, the magnetic characteristics (core iron losses) of electrical steel sheets are likely to deteriorate due to mechanical strain or thermal strain during processing.

As joining methods other than swaging and welding, for example, a method in which electrical steel sheets each having an insulating coating with an adhesive capability formed on a surface are caused to adhere together is known (Patent Document 1). Since adhesion using the insulating coating does not impart mechanical strain or thermal strain, the core iron loss is excellent compared with that in swaging or welding. Epoxy resins change in volume only to a small extent, are excellent in terms of heat resistance or oil resistance and chemical resistance and are excellent adhesives that cause electrical steel sheets to adhere together (Patent Documents 2 and 3).

Relevant prior art document is also represented by EP0232021 A2.

### [Citation List]

### [Patent Document]

[Patent Document 1]
   Japanese Unexamined Patent Application, First Publication No. 2017-011863
[Patent Document 2]
   Japanese Unexamined Patent Application, First Publication No. 2000-173816
[Patent Document 3]
   PTC International Publication No. WO 2004/070080

### [Summary of the Invention]

### [Problems to be Solved by the Invention]

In recent years, in response to a request for additional improvement in motor efficiency, additional reduction in core iron loss has been required. A decrease in the thickness of an electrical steel sheet has been effective for reducing core iron loss. However, since a decrease in the sheet thickness is accompanied by a decrease in the Young's modulus of the steel sheet, it is necessary to prevent stress strain, which is a cause for iron loss deterioration, from being imparted to the steel sheet. Epoxy resins are excellent in terms of heat resistance, but are hard and have poor toughness and thus impart stress strain to steel sheets when cured during adhesion. Therefore, a decrease in the thickness of a steel sheet causes iron loss deterioration.

In addition, driving motors and the like of electric vehicles become hot while in operation and are thus required to have additional heat resistance.

As means for improving heat resistance, there is a method in which a phenolic resin is blended. However, resins having excellent heat resistance are hard at normal temperature and impart large stress to laminated cores, which degrades magnetic characteristics. On the other hand, resins having appropriate hardness at near normal temperature become soft at high temperatures and are thus poor in heat resistance. These facts show that it is difficult to satisfy both excellent magnetic characteristics and excellent heat resistance that is high enough to hold a sufficient adhesion strength even in a state where resins are exposed to high temperatures while driving motors and the like are in operation.

An objective of the present invention is to provide a coating composition for an electrical steel sheet capable of satisfying both the magnetic characteristics of laminated cores and heat resistance that is high enough to hold an adhesion strength between electrical steel sheets even in a high-temperature state while the laminated cores are in operation, an electrical steel sheet, a laminated core and a rotary electric machine for all of which the coating composition for an electrical steel sheet is used.

### [Means for Solving the Problem]

The present invention is defined by appended claims.

### [Effects of the Invention]

According to the above-described aspects of the present invention, it is possible to provide a coating composition for an electrical steel sheet capable of satisfying both the magnetic characteristics of laminated cores and heat resistance that is high enough to hold an adhesion strength between electrical steel sheets even in a high-temperature state while the laminated cores are in operation, an electrical steel sheet, a laminated core and a rotary electric machine for all of which the coating composition for an electrical steel sheet is used.

### [Brief Description of Drawings]

Fig. 1 is a cross-sectional view of a rotary electric machine including a laminated core according to a first embodiment of the present invention.
Fig. 2 is a side view of the laminated core shown in Fig. 1.
Fig. 3 is a cross-sectional view in a direction of a line A-A in Fig. 2.
Fig. 4 is a plan view of a material for forming the laminated core shown in Fig. 1.
Fig. 5 is a cross-sectional view in a direction of a line B-B in Fig. 4.
Fig. 6 is an enlarged view of a C part of Fig. 5.
Fig. 7 is a side view of a manufacturing device that is used to manufacture the laminated core shown in Fig. 1.

### [Embodiment(s) for implementing the Invention]

Hereinafter, a laminated core according to an embodiment of the present invention, a rotary electric machine including this laminated core and a material that forms this laminated core will be described with reference to the drawings. In the present embodiment, as the rotary electric machine, an electric motor, specifically, an alternating-current electric motor, more specifically, a synchronous electric motor, and still more specifically, a permanent magnet field-type electric motor, will be described as an example. This type of electric motor is preferably employed in, for example, electric vehicles.

In addition, numerical limiting ranges expressed below using "to" include the lower limit value and the upper limit value in the ranges. Numerical values expressed with "less than" or "more than" are not included in numerical ranges.

### (Rotary electric machine 10)

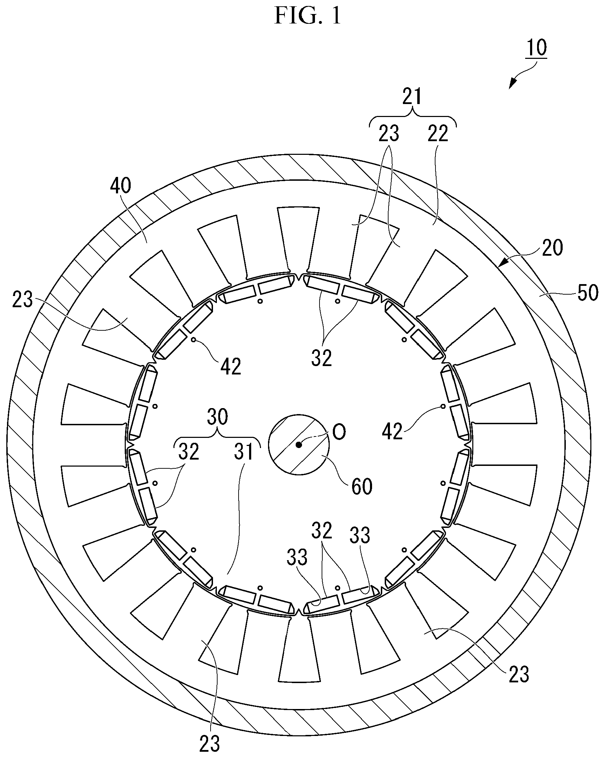

As shown in Fig. 1, a rotary electric machine 10 includes a stator 20, a rotor 30, a case 50 and a rotary shaft 60. The stator 20 and rotor 30 are accommodated in the case 50.

The stator 20 is fixed in the case 50.

In the present embodiment, as the rotary electric machine 10, an inner rotor type in which the rotor 30 is positioned radially inside the stator 20 is employed. However, as the rotary electric machine 10, an outer rotor type in which the rotor 30 is positioned outside the stator 20 may also be employed. In addition, in the present embodiment, the rotary electric machine 10 is a three-phase alternating-current motor having 12 poles and 18 slots. However, the number of poles, the number of slots, the number of phases, and the like can be changed as appropriate.

The rotary electric machine 10 can be rotated at a rotation speed of 1000 rpm by, for example, applying an excitation current of an effective value of 10 A and a frequency of 100 Hz to each phase.

The stator 20 includes an adhesive laminated core for a stator (hereinafter, stator core) 21 and a winding, not shown.

The stator core 21 includes a ring-shaped core back portion 22 and a plurality of tooth portions 23. Hereinafter, a direction along the central axis O of the stator core 21 (or the core back portion 22) will be referred to as the axial direction, the radial direction of the stator core 21 (or the core back portion 22) (a direction orthogonal to the central axis O) will be referred to as the radial direction, and the circumferential direction (a direction around the central axis O) of the stator core 21 (or the core back portion 22) will be referred to as the circumferential direction.

The core back portion 22 is formed in an annular shape in a plan view of the stator 20 seen in the axial direction.

The plurality of tooth portions 23 protrude radially inward (toward the central axis O of the core back portion 22 along the radial direction) from the inner circumference of the core back portion 22. The plurality of tooth portions 23 are disposed at equal angular intervals in the circumferential direction. In the present embodiment, 18 tooth portions 23 are provided every center angle of 20 degrees around the central axis O. The plurality of tooth portions 23 are formed in mutually equivalent shapes and mutually equivalent sizes. This makes the plurality of tooth portions 23 have mutually the same thickness dimensions.

The winding is wound around the tooth portions 23. The winding may be a concentrated winding or a distributed winding.

The rotor 30 is disposed radially inside the stator 20 (stator core 21). The rotor 30 includes a rotor core 31 and a plurality of permanent magnets 32.

The rotor core 31 is formed in a ring shape (annular shape) that is concentrically disposed with respect to the stator 20. The rotary shaft 60 is disposed in the rotor core 31. The rotary shaft 60 is fixed to the rotor core 31.

The plurality of permanent magnets 32 are fixed to the rotor core 31. In the present embodiment, one set of two permanent magnets 32 forms one magnetic pole. The plurality of permanent magnets 32 are disposed at equal angular intervals in the circumferential direction. In the present embodiment, 12 sets of permanent magnets 32 (24 permanent magnets in total) are provided every center angle of 30 degrees around the central axis O.

In the present embodiment, as the permanent magnet field-type electric motor, an embedded magnet-type motor is employed.

In the rotor core 31, a plurality of through holes 33 penetrating the rotor core 31 in the axial direction are formed. The plurality of through holes 33 are provided so as to correspond to the disposition of the plurality of permanent magnets 32. Each permanent magnet 32 is fixed to the rotor core 31 in a state of being disposed in the corresponding through hole 33. Each permanent magnet 32 can be fixed to the rotor core 31 by, for example, causing the outer surface of the permanent magnet 32 and the inner surface of the through hole 33 to adhere to each other with an adhesive. As the permanent magnet field-type electric motor, a surface permanent magnet-type motor may be employed instead of the embedded magnet-type motor.

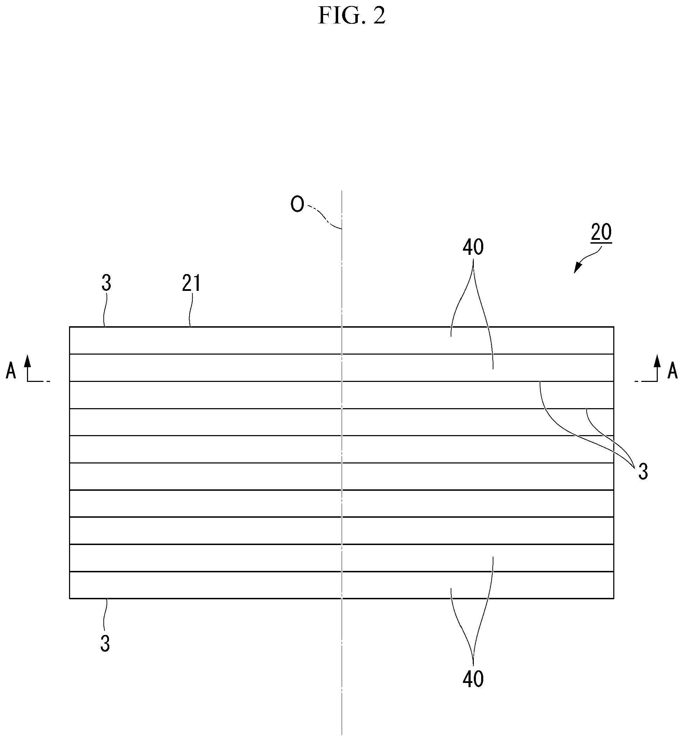

The stator core 21 and the rotor core 31 are both laminated cores. For example, the stator core 21 is formed by laminating a plurality of electrical steel sheets 40 in the lamination direction as shown in Fig. 2.

The lamination thickness (total length along the central axis O) of each of the stator core 21 and the rotor core 31 is set to, for example, 50.0 mm. The outer diameter of the stator core 21 is set to, for example, 250.0 mm. The inner diameter of the stator core 21 is set to, for example, 165.0 mm. The outer diameter of the rotor core 31 is set to, for example, 163.0 mm. The inner diameter of the rotor core 31 is set to, for example, 30.0 mm. These values are simply examples, and the lamination thickness, outer diameter and inner diameter of the stator core 21 and the lamination thickness, outer diameter and inner diameter of the rotor core 31 are not limited to these values. Here, the inner diameter of the stator core 21 is based on the tip portions of the tooth portions 23 in the stator core 21. That is, the inner diameter of the stator core 21 is the diameter of a virtual circle that inscribes the tip portions of all of the tooth portions 23.

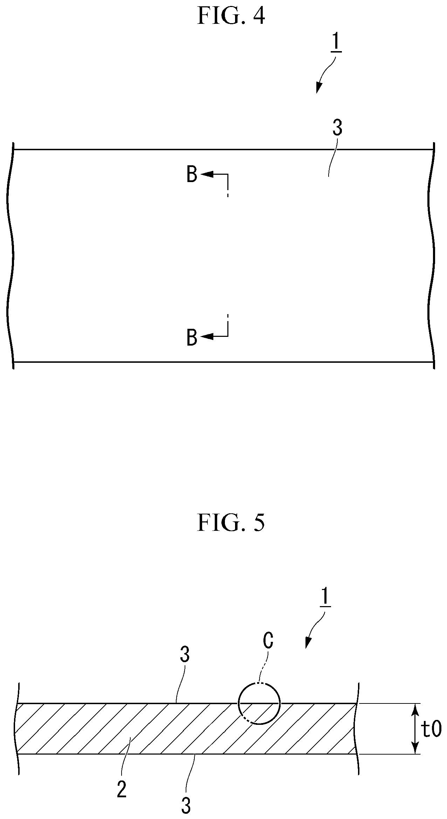

Each of the electrical steel sheets 40 that form the stator core 21 and the rotor core 31 is formed by, for example, blanking a material 1 as shown in Fig. 4 to Fig. 6 or the like. The material 1 is an electrical steel sheet that serves as the base material of the electrical steel sheet 40. Examples of the material 1 include a strip-shaped steel sheet, a cut-to-length sheet and the like.

While the topic of the current description is the laminated core, this material 1 will be described below. In the present specification, there is a case where a strip-shaped steel sheet that serves as the base material of the electrical steel sheet 40 is referred to as the material 1. There is a case where a steel sheet formed into a shape that is used in the laminated core by blanking the material 1 is referred to as the electrical steel sheet 40.

### (Material 1)

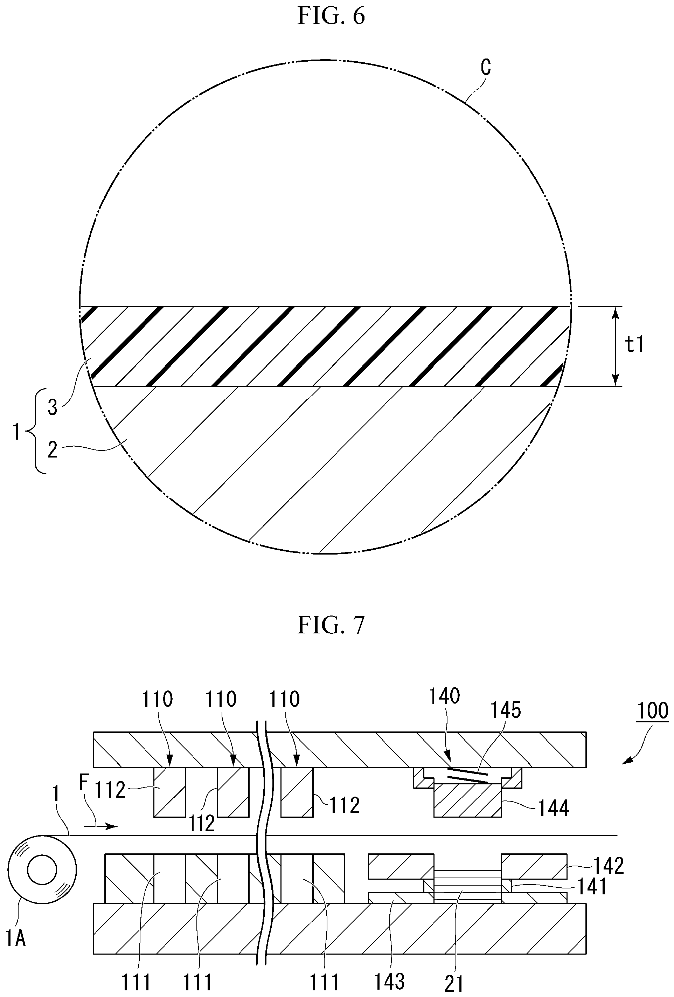

The material 1 is handled in a state of, for example, being wound around a coil 1A shown in Fig. 7. In the present embodiment, a non-oriented electrical steel sheet is employed as the material 1. As the non-oriented electrical steel sheet, a non-oriented electrical steel sheet of JIS C 2552: 2014 can be employed. However, instead of the non-oriented electrical steel sheet, an oriented electrical steel sheet may be employed as the material 1. As the oriented electrical steel sheet in this case, an oriented electrical steel sheet of JIS C 2553: 2019 can be employed. In addition, a non-oriented thin electrical steel strip or oriented thin electrical steel strip of JIS C 2558: 2015 can be employed.

The upper and lower limit values of the average sheet thickness t0 of the material 1 are set, for example, as described below in consideration of a case where the material 1 is used as the electrical steel sheet 40.

As the material 1 becomes thinner, the manufacturing cost of the material 1 increases. Therefore, when the manufacturing cost is taken into account, the lower limit value of the average sheet thickness t0 of the material 1 becomes 0.10 mm, preferably becomes 0.15 mm and more preferably becomes 0.18 mm.

On the other hand, when the material 1 is too thick, the manufacturing cost becomes favorable; however, in a case where the material 1 has been used as the electrical steel sheet 40, the eddy-current loss increases, and the core iron loss deteriorates. Therefore, when the core iron loss and the manufacturing cost are taken into account, the upper limit value of the average sheet thickness t0 of the material 1 becomes 0.65 mm, preferably becomes 0.35 mm and more preferably becomes 0.30 mm.

As the thickness that satisfies the above-described range of the average sheet thickness t0 of the material 1, 0.20 mm can be an example.

The average sheet thickness t0 of the material 1 includes not only the thickness of a base material steel sheet 2 to be described below but also the thickness of an insulating coating 3. In addition, as a method for measuring the average sheet thickness t0 of the material 1, for example, the following measurement method is followed. For example, in a case where the material 1 is wound in the shape of the coil 1A, at least a part of the material 1 is unwound in a flat sheet shape. In the material 1 unwound in a flat sheet shape, a predetermined position in the longitudinal direction of the material 1 (for example, a position apart from one end edge of the material 1 in the longitudinal direction by 10% of the total length of the material 1) is selected. At this selected position, the material 1 is divided into five regions along the width direction. At four sites that become the boundaries of these five regions, the sheet thickness of the material 1 is measured. The average value of the sheet thicknesses at the four sites can be defined as the average sheet thickness t0 of the material 1.

It is needless to say that the upper and lower limit values of the average sheet thickness t0 of this material 1 can also be employed as the upper and lower limit values of the average sheet thickness t0 of the electrical steel sheet 40. As a method for measuring the average sheet thickness t0 of the electrical steel sheet 40, for example, the following measurement method is followed. For example, the lamination thickness of the laminated core is measured at four sites at equal intervals in the circumferential direction (that is, every 90 degrees around the central axis O).

Each of the measured lamination thicknesses at the four sites is divided by the number of the electrical steel sheets 40 laminated, thereby calculating the sheet thickness per sheet. The average value of the sheet thicknesses at the four sites can be defined as the average sheet thickness t0 of the electrical steel sheet 40.

As shown in Fig. 5 and Fig. 6, the material 1 includes the base material steel sheet 2 and the insulating coatings 3.

The material 1 is formed by coating both surfaces of the strip-shaped base material steel sheet 2 with the insulating coatings 3. In the present embodiment, the majority of the material 1 is formed of the base material steel sheet 2, and the insulating coatings 3 that are each thinner than the base material steel sheet 2 are laminated on the surfaces of the base material steel sheet 2.

The chemical composition of the base material steel sheet 2 contains, by mass%, 2.5% to 4.5% of Si as described below. When the chemical composition is in this range, it is possible to set the yield strength of the material 1 (electrical steel sheet 40) to, for example, 380 MPa or more and 540 MPa or less.

Si: 2.5% to 4.5%
Al: 0.001% to 3.0%
Mn: 0.05% to 5.0%
Remainder: Fe and impurities

When the material 1 is used as the electrical steel sheet 40, the insulating coating 3 exhibits insulating performance between the electrical steel sheets 40 adjacent to each other in the lamination direction. In addition, in the present embodiment, the insulating coating 3 has an adhesive capability and causes the electrical steel sheets 40 adjacent to each other in the lamination direction to adhere to each other. The insulating coating 3 may be configured as a single layer or a plurality of layers. More specifically, for example, the insulating coating 3 may be configured as a single layer having both insulating performance and an adhesive capability or may be configured as a plurality of layers including an underlying insulating coating having excellent insulating performance and an overlying insulating coating having excellent adhesion performance. "The adhesive capability of the insulating coating 3" in the present embodiment means a capability of developing an adhesion strength of a predetermined value or higher under a predetermined temperature condition in a laminate composed of a plurality of the electrical steel sheets 40 laminated with the insulating coating 3 interposed therebetween.

In the present embodiment, the insulating coatings 3 fully cover both surfaces of the base material steel sheet 2 with no gap. However, some of the insulating coatings 3 may cover both surfaces of the base material steel sheet 2 with a gap as long as the above-described insulating performance or adhesive capability is ensured. In other words, some of the insulating coatings 3 may be intermittently provided on the surface of the base material steel sheet 2. However, in order to ensure the insulating performance, there is a need for both surfaces of the base material steel sheet 2 to be covered with the insulating coatings 3 so as to prevent both surfaces of the base material steel sheet 2 from being fully exposed. Specifically, in a case where the insulating coating 3 has no underlying insulating coating having excellent insulating performance and is configured as a single layer having both insulating performance and an adhesive capability, the insulating coating 3 needs to be formed on the entire surface of the base material steel sheet 2 with no gap. In contrast, in a case where the insulating coating 3 is configured as a plurality of layers including an underlying insulating coating having excellent insulating performance and an overlying insulating coating having an excellent adhesive capability, not only when both the underlying insulating coating and the overlying insulating coating are formed on the entire surface of the base material steel sheet 2 with no gap, but also when the underlying insulating coating is formed on the entire surface of the base material steel sheet with no gap, but when the overlying insulating coating is intermittently provided, both the insulating performance and the adhesive capability are satisfied.

A coating composition that configures the underlying insulating coating is not particularly limited, and, for example, an ordinary treatment agent such as a chromic acid-containing treatment agent or a phosphate-containing treatment agent can be used.

The insulating coating 3 having an adhesive capability is formed by applying a coating composition for an electrical steel sheet containing an epoxy resin, a first curing agent and a second curing agent.

The insulating coating composed of the coating composition for an electrical steel sheet is in an uncured state or semi-cured state (B stage) before bonded by heat and pressure during the manufacturing of the laminated core and develops the adhesive capability by heating during bonding by heat and pressure, which makes a curing reaction proceed. The coating composition for an electrical steel sheet may be used to form an insulating coating configured as a single layer or may be used to form an overlying insulating coating that is provided on an underlying insulating coating.

As the epoxy resin, an ordinary epoxy resin can be used, and, specifically, any epoxy resin having two or more epoxy groups in one molecule can be used with no particular limitations. Examples of such an epoxy resin include a bisphenol A-type epoxy resin, a bisphenol F-type epoxy resin, a phenol novolac-type epoxy resin, a cresol novolac-type epoxy resin, a triphenylmethane-type epoxy resin, an alicyclic epoxy resin, a glycidyl ester-type epoxy resin, a glycidylamine-type epoxy resin, a hydantoin-type epoxy resin, an isocyanurate-type epoxy resin, an acrylic acid-modified epoxy resin (epoxy acrylate), a phosphorus-containing epoxy resin, halides or hydrogenated substances thereof (a brominated epoxy resin and the like) and the like. As the epoxy resin, one epoxy resin may be used singly or two or more epoxy resins may be used in combination.

The amount of the epoxy resin is, for example, preferably 30 to 90 mass%, more preferably 40 to 80 mass% and still more preferably 50 to 70 mass% of the total mass of the coating composition for an electrical steel sheet. When the amount of the epoxy resin is the above-described lower limit value or more, the adhesion strength of the electrical steel sheet 40 can be further increased. When the amount of the epoxy resin is the above-described upper limit value or less, stress strain in the electrical steel sheet 40 can be further suppressed.

The first curing agent is composed of a phenolic resin including a phenol skeleton having any one or both of an alkyl group and an alkoxy group. The phenolic resin in the first curing agent may include only any one of a phenol skeleton having an alkyl group, a phenol skeleton having an alkoxy group and a phenol skeleton having an alkyl group and an alkoxy group or may include two or more thereof. The phenolic resin in the first curing agent may be a novolac type or a resole type.

As the first curing agent, one first curing agent may be used singly or two or more first curing agents may be used in combination.

The alkyl group in the phenol skeleton in the first curing agent may be linear or branched.

The lower limit of the number of carbon atoms in the alkyl group in the phenol skeleton is preferably two and more preferably four. When the number of carbon atoms in the alkyl group is the above-described lower limit value or more, it is easy to suppress the deterioration of the magnetic characteristics of laminated cores.

The upper limit of the number of carbon atoms in the alkyl group in the phenol skeleton is preferably 20 and more preferably 12. When the number of carbon atoms in the alkyl group is the above-described upper limit value or less, it is possible to shorten the curing time of the epoxy resin.

Examples of the phenolic resin including the phenol skeleton having the alkyl group include phenolic resins having any one or both of a configuration unit represented by the following formula (a-1) (hereinafter, also referred to as the configuration unit (a-1)) and a configuration unit represented by the following formula (a-2) (hereinafter, also referred to as the configuration unit (a-2)).

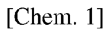

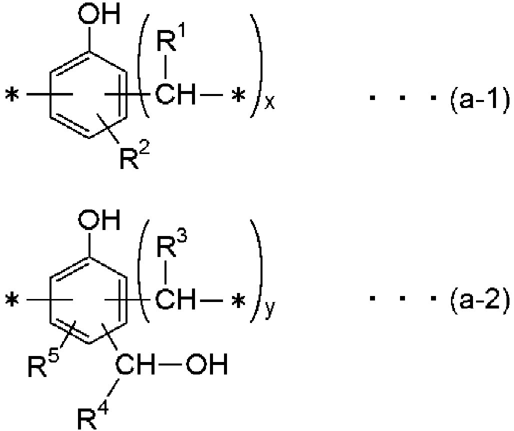

Here, in the formula (a-1), R¹ is a hydrogen atom, a methyl group, an ethyl group, a phenyl group or a hydroxyphenyl group. R² is an alkyl group having 1 to 20 carbon atoms. x is an integer of 1 to 3. In the formula (a-2), R³ and R⁴ are each a hydrogen atom, a methyl group, an ethyl group, a phenyl group or a hydroxyphenyl group. R⁵ is an alkyl group having 1 to 20 carbon atoms. y is 1 or 2.

"*" in the formula (a-1) and the formula (a-2) indicates a bonding site to an adjacent configuration unit and bonds to a hydrogen atom in the case of not bonding to an adjacent configuration unit in a configuration unit that is positioned at a terminal of a polymer chain.

R¹ is preferably a hydrogen atom from the viewpoint of the production cost.

x is preferably 1 to 3 from the viewpoint of the crosslinking density.

R² is preferably an alkyl group having 2 to 20 carbon atoms and more preferably an alkyl group having 2 to 12 carbon atoms.

The configuration unit (a-1) is preferably a configuration unit having a group represented by -CH(R¹)-* in any one or both of the ortho position and the para position of the phenol skeleton and having a group represented by -R² (alkyl group) in the meta position.

The number of the types of the configuration unit (a-1) in the phenolic resin in the first curing agent may be one or more.

R³ and R⁴ are each preferably a hydrogen atom from the viewpoint of the production cost.

y is preferably 1 to 3 from the viewpoint of the crosslinking density.

R⁵ is preferably an alkyl group having 2 to 20 carbon atoms and more preferably an alkyl group having 2 to 12 carbon atoms.

The configuration unit (a-2) is preferably a configuration unit having a group represented by -CH(R³)-* and a group represented by -CH(R⁴)-OH in two or more selected from the group consisting of the ortho position and the para position of the phenol skeleton and having a group represented by -R⁵ (alkyl group) in the meta position.

The number of the types of the configuration unit (a-2) in the phenolic resin in the first curing agent may be one or more.

The alkoxy group in the phenol skeleton in the first curing agent may be linear or branched.

The lower limit of the number of carbon atoms in the alkoxy group in the phenol skeleton is preferably two. When the number of carbon atoms in the alkoxy group is the above-described lower limit value or more, it is possible to shorten the curing time of the epoxy resin.

The upper limit of the number of carbon atoms in the alkoxy group in the phenol skeleton is preferably 20 and more preferably 12. When the number of carbon atoms in the alkoxy group is the above-described upper limit value or less, it is easy to suppress a decrease in the adhesion strength.

Examples of the phenolic resin including the phenol skeleton having the alkoxy group include phenolic resins having a configuration unit represented by the following formula (a-3) (hereinafter, also referred to as the configuration unit (a-3)).

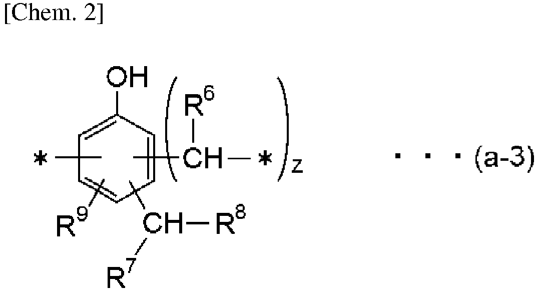

Here, in the formula (a-3), R⁶ and R⁷ are each a hydrogen atom, a methyl group, an ethyl group, a phenyl group or a hydroxyphenyl group. R⁸ is an alkoxy group having 1 to 20 carbon atoms. R⁹ is a hydrogen atom or an alkyl group having 1 to 20 carbon atoms. z is 1 or 2.

"*" in the formula (a-3) indicates a bonding site to an adjacent configuration unit and bonds to a hydrogen atom in the case of not bonding to an adjacent configuration unit in a configuration unit that is positioned at a terminal of a polymer chain.

R⁶ and R⁷ are each preferably a hydrogen atom from the viewpoint of the reactivity with the epoxy resin.

z is preferably 1 to 3 from the viewpoint of the crosslinking density.

R⁸ is preferably an alkoxy group having 2 to 20 carbon atoms and more preferably an alkoxy group having 2 to 12 carbon atoms.

R⁹ is preferably a hydrogen atom or an alkyl group having 2 to 20 carbon atoms and more preferably a hydrogen atom or an alkyl group having 2 to 12 carbon atoms.

The configuration unit (a-3) is preferably a configuration unit having a group represented by -CH(R⁶)-* and a group represented by -CH(R⁷)-R⁸ in two or more selected from the group consisting of the ortho position and the para position of the phenol skeleton and having a group represented by -R⁹ (a hydrogen atom or an alkyl group) in the meta position.

The number of the types of the configuration unit (a-3) in the phenolic resin in the first curing agent may be one or more.

The phenolic resin in the first curing agent is preferably a phenolic resin composed of any one or more of the configuration units (a-1) to (a-3) and preferably an alkyl phenolic resin composed of any one or both of the configuration unit (a-1) and the configuration unit (a-2) or an alkoxy phenolic resin composed of the configuration unit (a-3). These phenolic resins are advantageous from the viewpoint of a film-forming property.

The lower limit of the weight-average molecular weight (Mw) of the phenolic resin in the first curing agent is preferably 1000 and more preferably 2000. When Mw of the phenolic resin is the above-described lower limit value or more, the pot life at the time of applying the first curing agent as a treatment liquid to steel sheets can be guaranteed.

The upper limit of Mw of the phenolic resin in the first curing agent is preferably 20000 and more preferably 15000. When Mw of the phenolic resin is the above-described upper limit value or less, the risk of gelation at the time of applying the first curing agent as a treatment liquid to steel sheets is small.

Mw can be measured using polystyrene as a standard substance by size-exclusion chromatography (SEC) described in JIS K 7252-1: 2008.

A method for producing the phenolic resin in the first curing agent is not particularly limited, and a well-known method can be employed.

As a specific example, the alkyl phenolic resin composed of the configuration unit (a-1) can be produced by, for example, a method in which an alkylphenol is polycondensed with aldehydes in the presence of an acid catalyst (oxalic acid, hydrochloric acid, sulfonic acid or the like). The alkyl phenolic resin containing the configuration unit (a-2) can be produced by, for example, a method in which phenols are polycondensed (resole-forming reaction) with aldehydes in the presence of a basic catalyst (sodium hydroxide, ammonium, an amine or the like). The alkoxy phenolic resin containing the configuration unit (a-3) can be produced by, for example, a method in which an alkyl phenolic resin containing the configuration unit (a-2) is obtained and then an alkanol group (-CH(R⁴)-OH) in the configuration unit (a-2) is alkoxylated.

The alkyl phenol is not particularly limited, and examples thereof include cresols (o-cresol and the like), ethylphenols (o-ethylphenol and the like), propylphenols (p-propylphenol, p-isopropylphenol and the like), butylphenols (p-butylphenol, p-sec-butylphenol and the like), nonylphenols (p-nonylphenol and the like), dodecylphenols (p-dodecylphenol and the like), dimethylphenols (2,3-dimethylphenol and the like), diethylphenols (2,3-diethylphenol and the like), dibutylphenols (2,6-di-sec-butylphenol and the like), trimethylphenol (2,3,4-trimethylphenol and the like) and the like. As the alkyl phenol, one alkyl phenol may be used singly or two or more alkyl phenols may be used in combination.

The aldehydes are not particularly limited, and examples thereof include formaldehyde, acetaldehyde, benzaldehyde, salicylaldehyde and the like. As the aldehydes, one aldehyde may be used singly or two or more aldehydes may be used in combination.

An alcohol that is used for the alkoxylation is not particularly limited, and examples thereof include primary alcohols (methanol, ethanol, n-butanol, 1-nonanol and the like), secondary alcohols (2-hexanol, 3-hexanol, 1-heptanol, 2-heptanol, 2-nonanol and the like), tertiary alcohols (t-butyl alcohol, 2-methyl-2-butanol and the like) and the like. As the alcohol, one alcohol may be used singly or two or more alcohols may be used in combination.

The amount of the first curing agent in the coating composition for an electrical steel sheet is 5 parts by mass or more and 150 parts by mass or less with respect to 100 parts by mass of the epoxy resin. When the amount of the first curing agent is the above-described lower limit value or more, laminated cores having excellent magnetic characteristics can be obtained. When the amount of the first curing agent is the above-described upper limit value or less, laminated cores having excellent heat resistance can be obtained.

The lower limit of the amount of the first curing agent is preferably 10 parts by mass or more and more preferably 12 parts by mass or more. The upper limit of the amount of the first curing agent is preferably 140 parts by mass or less and more preferably 130 parts by mass or less.

The second curing agent is one or more selected from the group consisting of a phenolic resole resin and a phenolic novolac resin. The phenolic resole resin and the phenolic novolac resin as the second curing agent are resins having neither an alkyl group nor an alkoxy group in the phenol skeleton.

As the second curing agent, a phenolic resole resin may be used singly, a phenolic novolac resin may be used singly, or a phenolic resole resin and a phenolic novolac resin may be used in combination.

The total amount of the first curing agent and the second curing agent in the coating composition for an electrical steel sheet is preferably 10 parts by mass or more and 155 parts by mass or less with respect to 100 parts by mass of the epoxy resin. When the total amount of the first curing agent and the second curing agent is in the above-described range, it is easy to satisfy both the magnetic characteristics and the heat resistance. In a case where the total amount of the first curing agent and the second curing agent is less than the above-described lower limit value, the polymerization reaction of the epoxy resin is suppressed, and there is a concern that the high-temperature strength may deteriorate. In addition, in a case where the total amount of the first curing agent and the second curing agent exceeds the above-described upper limit value, there is a concern that the hardness of a cured product may become too high and the magnetic properties may deteriorate.

The lower limit of the total amount of the first curing agent and the second curing agent is preferably 20 parts by mass or more, more preferably 40 parts by mass or more and still more preferably 45 parts by mass or more. The upper limit of the total amount of the first curing agent and the second curing agent is preferably 130 parts by mass or less and more preferably 100 parts by mass or less.

When the total amount of the first curing agent and the second curing agent is in the above-described range, the lower limit of the amount of the second curing agent is preferably 5 parts by mass or more and more preferably 10 parts by mass or more. The upper limit of the amount of the second curing agent is preferably 60 parts by mass or less and more preferably 40 parts by mass or less.

The coating composition for an electrical steel sheet may contain different components other than the epoxy resin, the first curing agent and the second curing agent. Examples of the different components include an acrylic resin, a different curing agent other than the first curing agent and the second curing agent, a curing accelerator (curing catalyst), an emulsifier, a defoamer and the like. From the viewpoint of ensuring the adhesion strength, inorganic fillers such as silica, alumina and glass are not contained in the coating composition for an electrical steel sheet.

As the different components, one different component may be used singly or two or more different components may be used in combination.

The acrylic resin is not particularly limited. Examples of a monomer that is used for the acrylic resin include unsaturated carboxylic acids such as acrylic acid and methacrylic acid and (meta)acrylates such as methyl (meth)acrylate, ethyl (meth)acrylate, n-butyl (meth)acrylate, isobutyl (meth)acrylate, cyclohexyl (meth)acrylate, 2-ethylhexyl (meth)acrylate, 2-hydroxyethyl (meth)acrylate and hydroxypropyl (meth)acrylate. "(Meth) acrylate" refers to acrylate or methacrylate. As the acrylic resin, one acrylic resin may be used singly or two or more acrylic resins may be used in combination.

The acrylic resin may have a configuration unit derived from a different monomer other than acrylic monomers. Examples of the different monomer include ethylene, propylene, styrene and the like. As the different monomer, one different monomer may be used singly or two or more different monomers may be used in combination.

The glass transition temperature (Tg point) of the acrylic resin is not particularly limited, but the lower limit is preferably -40°C and more preferably -20°C. The upper limit of the Tg point of the acrylic resin is preferably 80°C and more preferably 50°C.

In a case where the coating composition for an electrical steel sheet contains the acrylic resin, the amount of the acrylic resin is not particularly limited and can be set to, for example, 1 mass% or more and 50 mass% or less with respect to the total amount of the epoxy resin and the acrylic resin. The content is also the same in a case where the acrylic resin is contained as an acrylic modified epoxy resin or an acrylic monomer.

In the case of using the acrylic resin, the acrylic resin may be used as an acrylic modified epoxy resin obtained by grafting an acrylic resin into an epoxy resin. In the coating composition for an electrical steel sheet, the acrylic resin may be contained as a monomer that forms the acrylic resin.

Examples of the different curing agent include latent epoxy resin curing agents that initiate a curing reaction by heating. Specific examples thereof include aromatic polyamines, acid anhydrides, dicyandiamides, boron trifluoride-amine complexes, organic acid hydrazides and the like. As the different curing agent, one different curing agent may be used singly or two or more different curing agents may be used in combination.

The amount of the different curing agent in the coating composition for an electrical steel sheet is preferably 20 parts by mass or less and more preferably 10 parts by mass or less with respect to 100 parts by mass of the epoxy resin.

Ordinarily, when an adhesion strength at a high temperature is guaranteed, epoxy resin adhesives having excellent heat resistance have a large Young's modulus at near normal temperature and impart stress to steel sheets to degrade magnetic characteristics (core iron loss). On the other hand, when resin compositions have an appropriate strength at near normal temperature, the heat resistance deteriorates.

**In** the present embodiment, the phenolic resin having any one or both of an alkyl group and an alkoxy group, which is used as the first curing agent, has a low elastic modulus. When such a first curing agent is blended with the epoxy resin in combination with the second curing agent, an excessive increase in the elastic modulus of the insulating coating is suppressed. As a result, stress that is imparted to steel sheets is reduced, and thus laminated cores having excellent magnetic characteristics can be obtained. In addition, since the phenolic resin has excellent heat resistance, the use of the first curing agent and the second curing agent in combination also improves the heat resistance. From these facts, both the magnetic characteristics and the heat resistance can be satisfied.

The cure shrinkage of the coating composition for an electrical steel sheet is preferably 15% or less, more preferably 12% or less, still more preferably 10% or less and particularly preferably 8% or less. When the cure shrinkage is the above-described upper limit value or less, it is easy to reduce stress that is imparted to steel sheets, and laminated cores having excellent magnetic characteristics can be easily obtained.

The cure shrinkage is measured from a change in the sheet thickness in accordance with JIS K 6941.

The insulating coating 3 can be formed by, for example, applying, drying and baking the coating composition for an electrical steel sheet on the surface of the base material steel sheet.

The lower limit value of the achieving temperature during baking is preferably 120°C or higher and more preferably 140°C or higher. The upper limit value of the achieving temperature during baking is preferably 200°C or lower and more preferably 180°C or lower. When the achieving temperature is the above-described lower limit value or higher, the coating composition for an electrical steel sheet sufficiently adheres to the electrical steel sheet, and peeling is suppressed. When the achieving temperature is the above-described upper limit value or lower, it is possible to suppress the curing of the epoxy resin and to maintain the adhesive capability of the coating composition for an electrical steel sheet.

The lower limit value of the baking time is preferably five seconds or longer and more preferably 10 seconds or longer. The upper limit value of the baking time is preferably 60 seconds or shorter and more preferably 30 seconds or shorter. When the baking time is the above-described lower limit value or longer, the coating composition for an electrical steel sheet sufficiently adheres to the electrical steel sheet, and peeling is suppressed. When the baking time is the above-described upper limit value or shorter, it is possible to suppress the curing of the epoxy resin and to maintain the adhesive capability of the coating composition for an electrical steel sheet.

The upper and lower limit values of the average thickness t1 of the insulating coating 3 may be set, for example, as described below in consideration of a case where the material 1 is used as the electrical steel sheet 40.

In a case where the material 1 is used as the electrical steel sheet 40, the average thickness t1 of the insulating coating 3 (the thickness of the electrical steel sheet 40 (material 1) per surface) is adjusted such that insulating performance and an adhesive capability between the electrical steel sheets 40 that are laminated together can be ensured.

In the case of the insulating coating 3 configured as a single layer, the average thickness t1 of the entire insulating coating 3 (the thickness of the electrical steel sheet 40 (material 1) per surface) can be set to, for example, 1.5 µm or more and 8.0 µm or less.

In the case of the insulating coating 3 configured as a plurality of layers, the average thickness of the underlying insulating coating can be set to, for example, 0.3 µm or more and 2.5 µm or less and is preferably 0.5 µm or more and 1.5 µm or less. The average thickness of the overlying insulating coating can be set to, for example, 1.5 µm or more and 8.0 µm or less.

As a method for measuring the average thickness t1 of the insulating coating 3 in the material 1, with the same concept of the average sheet thickness t0 of the material 1, the thicknesses of the insulating coating 3 at a plurality of sites are measured, and the average of these thicknesses can be obtained.

It is needless to say that the upper and lower limit values of average thickness t1 of the insulating coating 3 in the material 1 can also be employed as the upper and lower limit values of the average thickness t1 of the insulating coating 3 in the electrical steel sheet 40.

As a method for measuring the average thickness t1 of the insulating coating 3 in the electrical steel sheet 40, for example, the following measurement method is followed. For example, among the plurality of electrical steel sheets that forms the laminated core, the electrical steel sheet 40 that is positioned outermost in the lamination direction (the electrical steel sheet 40 having a surface exposed in the lamination direction) is selected. On the surface of the selected electrical steel sheet 40, a predetermined position in the radial direction (for example, a position exactly in the middle (at the center) between the inner circumferential edge and the outer circumferential edge in the electrical steel sheet 40) is selected. At the selected position, the thickness of the insulating coating 3 of the electrical steel sheet 40 is measured at four sites at equal intervals in the circumferential direction (that is, every 90 degrees around the central axis O). The average value of the measured thicknesses at the four sites can be regarded as the average thickness t1 of the insulating coating 3.

The reason for measuring the average thickness t1 of the insulating coating 3 in the electrical steel sheet 40 that is positioned outermost in the lamination direction as described above is that the insulating coating 3 is carefully produced so that the thickness of the insulating coating 3 rarely changes at the lamination position along the lamination direction of the electrical steel sheet 40.

The electrical steel sheets 40 are manufactured by blanking the materials 1 as described above, and the laminated core (the stator core 21 or the rotor core 31) is manufactured with the electrical steel sheets 40.

### (Method for laminating laminated core)

Hereinafter, the laminated core will be described again.

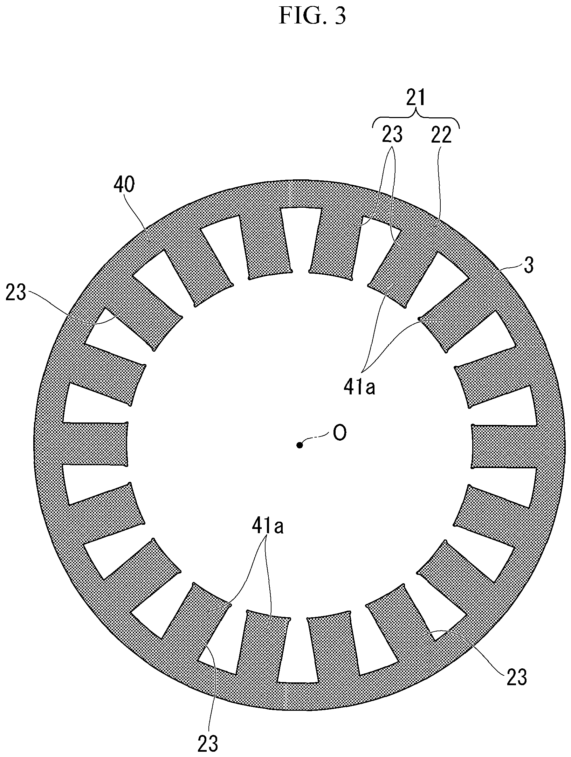

The plurality of electrical steel sheet 40 that forms the stator core 21 are laminated with the insulating coating 3 interposed therebetween as shown in Fig. 3.

The electrical steel sheets 40 adjacent to each other in the lamination direction adhere to each other throughout the entire surfaces with the insulating coating 3. In other words, the surface of the electrical steel sheet 40 in the lamination direction (hereinafter, referred to as the first surface) forms an adhesive areas 41a as a whole. Here, the electrical steel sheets 40 adjacent to each other in the lamination direction may not adhere to each other throughout the entire surfaces. In other words, on the first surface of the electrical steel sheet 40, the adhesive area 41a and a non-adhesive area (not shown) may be present in a mixed manner.

In the present embodiment, the plurality of electrical steel sheets that form the rotor core 31 are fixed to each other with swages 42 (dowels) shown in Fig. 1. However, the plurality of electrical steel sheets that form the rotor core 31 also may have a laminated structure in which the electrical steel sheets are fixed with the insulating coatings 3 as in the stator core 21.

In addition, the laminated core such as the stator core 21 or the rotor core 31 may be formed by so-called rotating palletization.

### (Method for producing laminated core)

The stator core 21 is manufactured using, for example, a manufacturing device 100 shown in Fig. 7. Hereinafter, in the description of a manufacturing method, first, the manufacturing device 100 of the laminated core (hereinafter, simply referred to as the manufacturing device 100) will be described.

In the manufacturing device 100, the material 1 is gradually formed into the shape of the electrical steel sheet 40 by performing blanking a plurality of times with a mold disposed at each stage while being sent in an arrow F direction from the coil 1A (hoop). In addition, the blanked electrical steel sheets 40 are laminated and pressed while being heated. As a result, the electrical steel sheets 40 adjacent to each other in the lamination direction are caused to adhere together with the insulating coatings 3 (that is, a part of the insulating coating 3 that is positioned in the adhesive area 41a is made to exhibit an adhesive capability), and the adhesion is completed.

As shown in Fig. 7, the manufacturing device 100 includes a plurality of stages of blanking stations 110. The number of the stages of the blanking stations 110 may be two or more. Each stage of the blanking station 110 includes a female mold 111 disposed below the material 1 and a male mold 112 disposed above the material 1.

The manufacturing device 100 further includes a lamination station 140 at a position downstream of the blanking station 110 provided most downstream. This lamination station 140 includes a heating device 141, an outer circumferential blanking female mold 142, a heat-insulating member 143, an outer circumferential blanking male mold 144 and a spring 145.

The heating device 141, the outer circumferential blanking female mold 142 and the heat-insulating member 143 are disposed below the material 1. On the other hand, the outer circumferential blanking male mold 144 and the spring 145 are disposed above the material 1. A reference symbol 21 indicates a stator core.

In the manufacturing device 100 configured as described above, first, the material 1 is sequentially sent out from the coil 1A in the arrow F direction in Fig. 7. In addition, blanking is sequentially performed on this material 1 with the plurality of stages of the blanking stations 110. This blanking makes the shape of the electrical steel sheet 40 having the core back portion 22 and the plurality of tooth portions 23 shown in Fig. 3 obtained in the material 1. However, the material is not fully blanked at this point and thus moves toward the next step along the arrow F direction.

In addition, finally, the material 1 is sent out to the lamination station 140 and blanked with the outer circumferential blanking male mold 144, and the blanked products are accurately laminated. Upon this lamination, the electrical steel sheet 40 receives a certain pressing force due to the spring 145. The blanking step and the lamination step, which have been described above, are sequentially repeated, whereby it is possible to stack a predetermined number of the electrical steel sheets 40. Furthermore, the laminated core formed by stacking the electrical steel sheets 40 as described above is heated up to, for example, a temperature of 200°C with the heating device 141. This heating makes the insulating coatings 3 of the electrical steel sheets 40 adjacent to each other adhere to each other (adhesion step).

The conditions for the adhesion step are not particularly limited. For example, the heating temperature in the adhesion step is preferably 120°C to 250°C. The heating time in the adhesion step is affected by the sizes of the laminated core or the heating method, but is preferably, for example, 30 seconds to 120 minutes. In addition, at the time of causing the insulating coatings 3 to adhere to each other, the insulating coatings 3 may be caused to adhere to each other by pressing the laminate. The pressure and the pressing time at the time of pressing the laminate are preferably, for example, 2 to 300 MPa and 30 seconds to 120 minutes.

The heating device 141 may not be disposed in the outer circumferential female blanking mold 142. That is, the electrical steel sheets 40 laminated with the outer circumferential blanking female mold 142 may be removed to the outside of the outer circumferential blanking female mold 142 before caused to adhere together. In this case, the heat-insulating member 143 may not be present in the outer circumferential blanking female mold 142. Furthermore, in this case, the stacked electrical steel sheets 40 that are yet to adhere together may be transported or heated in a state of being held by being pinched from both sides in the lamination direction with jigs, not shown.

The stator core 21 is completed by the above-described individual steps.

As described above, in the present invention, the insulating coating is formed on the surface of the electrical steel sheet with the coating composition for an electrical steel sheet in which the epoxy resin, the first curing agent and the second curing agent are combined in specific fractions. Therefore, it is possible to satisfy both excellent magnetic characteristics (core iron loss) of the laminated core and excellent heat resistance enabling the adhesion strength between the electrical steel sheets to be held even in a high-temperature state while the laminated core is in operation.

The shape of the stator core is not limited to the form described in the embodiment. Specifically, the dimensions of the outer diameter and the inner diameter and the lamination thickness of the stator core, the number of the slots, the dimensional ratio of the tooth portion between the circumferential direction and the radial direction, the dimensional ratio in the radial direction between the tooth portion and the core back portion and the like can be arbitrarily designed depending on desired characteristics of rotary electric machines.

In the rotor in the embodiment, one set of two permanent magnets 32 forms one magnetic pole, but the present invention is not limited to this form. For example, one permanent magnet 32 may form one magnetic pole or three or more permanent magnets 32 may form one magnetic pole.

In the embodiment, as the rotary electric machine 10, the permanent magnet field-type electric motor has been described as an example, but the structure of the rotary electric machine 10 is not limited only thereto as provided as exemplary examples below, and, furthermore, it is also possible to employ a variety of well-known structures that are not provided as exemplary examples below.

In the embodiment, as the rotary electric machine 10, the permanent magnet field-type electric motor has been described as an example, but the present invention is not limited only thereto. For example, the rotary electric machine 10 may be a reluctance-type electric motor or a winding-field electric motor (winding-field electric motor).

In the embodiment, as the alternating-current electric motor, the synchronous electric motor has been described as an example, but the present invention is not limited thereto. For example, the rotary electric machine 10 may be an induction electric motor.

In the embodiment, as the rotary electric machine 10, the alternating-current electric motor has been described as an example, but the present invention is not limited thereto. For example, the rotary electric machine 10 may be a direct-current electric motor.

In the embodiment, as the rotary electric machine 10, the electric motor has been described as an example, but the present invention is not limited thereto. For example, the rotary electric machine 10 may be an electric generator.

### [Examples]

Hereinafter, the effect of one aspect of the present invention will be specifically described using examples, but conditions in the examples are simply examples of the conditions employed to confirm the feasibility and effect of the present invention, and the present invention is not limited by the following description.

### [Raw materials]

Raw materials used in the examples will be shown.

### (Epoxy resins)

E1: Bisphenol A-type epoxy resin
E2: Bisphenol F-type epoxy resin
E3: Triphenylmethane-type epoxy resin

### (First curing agents)

A1: Alkyl phenolic resin (configuration unit (a-1), R¹: hydrogen atom, R² (meta position): -(CH₂)₃CH₃, x = 1, Mw = 7000)
A2: Alkyl phenolic resin (configuration unit (a-1), R¹: hydrogen atom, R² (meta position): -(CH₂)₈CH₃, x = 2, Mw = 3000)
A3: Alkoxy phenolic resin (configuration unit (a-3), R⁶: hydrogen atom, R⁷: hydrogen atom, R⁸ (meta position): -O-C(CH₃)₂-CH₂CH₃, z = 1, R⁹: hydrogen atom, Mw = 14000)

### (Second curing agents)

H1: Phenolic resole resin
H2: Phenolic novolac resin

### (Curing agent (comparison subject))

B1: Diaminodiphenylmethane

### (Blending agents)

M1: Acrylic resin (methyl methacrylate unit:isobutyl acrylate unit:styrene unit:2-ethylhexyl acrylate unit (mole fractions) = 40:20:20:10, glass transition temperature: 32°C)
M2: Acrylic resin (methyl methacrylate unit:n-butyl acrylate unit (mole ratio) = 55:45, glass transition temperature: 10°C)

### [Magnetic characteristic]

55 mm × 55 mm-sized rectangular electrical steel sheets (single sheets) were cut out from an electrical steel strip of each example, and 10 electrical steel sheets were laminated and caused to adhere together under conditions of a steel sheet temperature of 200°C, a pressure of 10 MPa and a pressing time of one hour, thereby producing a laminated core. For the obtained laminated core, single sheet magnetic characteristics were measured in a rolling direction and in a direction at a right angle with respect to the rolling direction by single sheet magnetic measurement method in accordance with JIS C 2556 (2015), and the average value of these values was obtained as the magnetic characteristic. As the magnetic characteristic (magnetic property), "W10/400 (W/kg)" was evaluated as the iron loss. "W10/400" is an iron loss when the frequency is 400 Hz and the maximum magnetic flux density is 1.0T.

### [Adhesion strength]

Two oblong electrical steel sheets (single sheets) that were 30 mm in width and 60 mm in length were cut out from the electrical steel strip of each example. Next, a coating composition for an electrical steel sheet was applied to the surfaces, and the 30 mm-wide and 10 mm-long tip portions of the respective electrical steel sheets were overlapped and pressed, thereby producing a measurement sample. As pressing conditions, the steel sheet temperature was set to 200°C, the pressure was set to 10 MPa, and the pressing time was set to one hour.

The obtained sample was stretched at a tensile rate of 2 mm/minute in an atmosphere where the atmosphere temperature was 25°C or 150°C, the maximum load (N) applied until the two single sheets peeled off from each other was measured, and a numerical value obtained by dividing this maximum load (N) by the adhering area was regarded as the adhesion strength (MPa).

### [Cure shrinkage]

The coating composition for an electrical steel sheet was applied to the surface of the electrical steel sheet of each example, and the cure shrinkage was measured. The cure shrinkage was measured from a change in the sheet thickness in accordance with JIS K 6941.

### [Determination]

For each example, determination was made with the following standards. A small iron loss means that stress strain that is imparted to electrical steel sheets is suppressed. The measurement results and the determination determinations are shown in Table 2. In the table, values outside the scope of the invention were underlined.

### [Standards]

"Good": The adhesion strength at 25°C is 5.0 MPa or more, the adhesion strength at 150°C is 1.0 MPa or more, and the magnetic characteristic is less than 12.0 W/kg. Regarding the magnetic characteristic, 11.5 W/kg or less is more preferable.

"Bad": The adhesion strength at 25°C is less than 5.0 MPa, the adhesion strength at 150°C is less than 1.0 MPa, or the magnetic characteristic is 12.0 W/kg or more.

### [Example 1]

As a base material steel sheet, a 0.25 mm-thick and 100 mm-wide non-oriented electrical steel sheet composed of, by mass%, Si: 3.0%, Mn: 0.2%, Al: 0.5% and a remainder of Fe and impurities was used.

Individual components shown in Table 1 were mixed together to prepare a coating composition for an electrical steel sheet. The obtained coating composition for an electrical steel sheet was applied to the surface of the base material steel sheet and baked at 160°C for 20 seconds, thereby obtaining an electric steel strip having insulating coatings having an average thickness of 3 µm.

### [Examples 2 to 8 and Comparative Examples 1 to 8]

Electrical steel strips were obtained in the same manner as in Example 1 except that the composition and the baking conditions of the coating composition for an electrical steel sheet were changed as shown in Table 1.

The composition and the baking conditions of the coating composition for an electrical steel sheet of each example are shown in Table 1. The evaluation results of the magnetic characteristic (magnetic property) and adhesion strength of each example are shown in Table 2.

**[Table 1]**

| | Epoxy resin | | First curing agent | | Second curing agent | | Total content | Blending agent | | Baking conditions | | Cure **shrinkage** (%) |
|---|---|---|---|---|---|---|---|---|---|---|---|---|
| | Type | Parts by mass | Type | Parts by mass | Type | Parts by mass | Parts by mass | Type | Parts by mass | Achieving temperature [°C] | Time [seconds] | |
| Example 1 | E1 | | A1 | 50 | H1 | 10 | 60 | M1 | 20 | 160 | 20 | 3.2 |
| Example 2 | E1 | | A1 | 15 | H2 | 30 | 45 | M1 | 10 | 160 | 20 | 3.7 |
| Example 3 | E1 | | A2 | 80 | H2 | 10 | 90 | M2 | 10 | 180 | 10 | 4.2 |
| Example 4 | E2 | | A2 | 120 | II1 | 5 | 125 | M2 | 20 | 160 | 20 | 4.6 |
| Example 5 | E2 | | A3 | 35 | H1 | 30 | 65 | M1 | 45 | 200 | 5 | 3.6 |
| Example 6 | E3 | | A3 | 15 | H2 | 60 | 75 | M1 | 3 | 140 | 30 | 3.9 |
| Example 7 | E3 | | A3 | 140 | H2 | 5 | 145 | - | - | 140 | 30 | 4.7 |
| Example 8 | E3 | 100 | A3 | 142 | H2 | 15 | 157 | M1 | 20 | 200 | 10 | 5.1 |
| Comparative Example 1 | E1 | | II2 | 30 | II1 | 30 | 60 | M2 | 25 | 160 | 20 | 7.8 |
| Comparative Example 2 | E2 | | A1 | 3 | H1 | 30 | 33 | M1 | 5 | 160 | 20 | 6.9 |
| Comparative Example 3 | E1 | | A2 | 1 | II2 | 30 | 31 | M1 | 10 | 140 | 30 | 8.5 |
| Comparative Example 4 | E1 | | A1 | 180 | H2 | 3 | 183 | M2 | 60 | 140 | 30 | 3.5 |
| Comparative Example 5 | E1 | | A2 | 155 | H1 | 3 | 158 | M1 | 40 | 200 | 5 | 3.7 |
| Comparative Example 6 | E2 | | - | - | II2 | 60 | - | M2 | 30 | 200 | 5 | 6.7 |
| Comparative Example 7 | E2 | | A1 | 50 | - | - | - | M1 | 75 | 200 | 5 | 4.2 |
| Comparative Example 8 | E2 | | A1 | 50 | B1 | 10 | 60 | M2 | 10 | 160 | 20 | 4.6 |

**[Table 2]**

| | Adhesion strength [MPa] | | Magnetic property [W/kg] | Determination |
|---|---|---|---|---|
| | 25°C | 150°C | W 10/400 | |
| Example 1 | 9.0 | 3.0 | 10.7 | Good |
| Example 2 | 11.0 | 3.0 | 10.8 | Good |
| Example 3 | 8.0 | 2.0 | 11.1 | Good |
| Example 4 | 9.0 | 3.0 | 11.2 | Good |
| Example 5 | 13.0 | 3.0 | 11.0 | Good |
| Example 6 | 11.0 | 3.0 | 10.9 | Good |
| Example 7 | 12.0 | 3.0 | 11.3 | Good |
| Example 8 | 13.0 | 1.5 | 11.9 | Good |
| Comparative Example 1 | 14.0 | 2.0 | 12.6 | Bad |
| Comparative Example 2 | 14.0 | 3.0 | 12.1 | Bad |
| Comparative Example 3 | 15.0 | 4.0 | 12.9 | Bad |
| Comparative Example 4 | 7.0 | 0.4 | 11.1 | Bad |
| Comparative Example 5 | 7.0 | 0.4 | 11.2 | Bad |
| Comparative Example 7 | 15.0 | 3.0 | 13.1 | Bad |
| Comparative Example 8 | 4.0 | 0.3 | 10.9 | Bad |
| Comparative Example 9 | 6.0 | 0.3 | 10.8 | Bad |

As shown in Table 2, in Examples 1 to 8 where the epoxy resin, the first curing agent and the second curing agent were combined in specific fractions, sufficient adhesion strengths were ensured even at 150°C, the heat resistance was excellent, and additionally, the magnetic characteristics were also excellent.

On the other hand, in Comparative Examples 1 and 6 where the first curing agent was not contained, Comparative Examples 2 to 5 where the amount of the first curing agent was outside the scope of the present invention and Comparative Examples 7 and 8 where the second curing agent was not contained, both the heat resistance and the magnetic characteristic could not be satisfied.

### [Industrial Applicability]

According to the present invention, it is possible to satisfy both the heat resistance and the magnetic characteristics of laminated cores. Therefore, the present invention is significantly industrially applicable.

### [Brief Description of the Reference Symbols]

1 Material
2 Base material steel sheet
3 Insulating coating
10 Rotary electric machine
20 Stator
21 Stator core
40 Electrical steel sheet

## Claims

1. A laminated core,
wherein a plurality of electrical steel sheets are laminated and caused to adhere together,
wherein the electrical steel sheets comprise an insulating coating on a surface,
wherein the insulating coating contains a coating composition comprising:
an epoxy resin;
a first curing agent composed of a phenolic resin including a phenol skeleton having any one or both of an alkyl group and an alkoxy group; and
a second curing agent of one or more selected from a phenolic resole resin and a phenolic novolac resin,
wherein an amount of the first curing agent is 5 parts by mass or more and 150 parts by mass or less with respect to 100 parts by mass of the epoxy resin.

2. A rotary electric machine comprising:
the laminated core according to claim 1.

3. Use of a coating composition comprising:
an epoxy resin;
a first curing agent composed of a phenolic resin including a phenol skeleton having any one or both of an alkyl group and an alkoxy group; and
a second curing agent of one or more selected from a phenolic resole resin and a phenolic novolac resin,
wherein an amount of the first curing agent is 5 parts by mass or more and 150 parts by mass or less with respect to 100 parts by mass of the epoxy resin,
for preparing a laminated core as defined in claim 1 or a rotary electric machine as defined in claim 2.

4. The laminated core according to claim 1, the rotary electric machine according to claim 2 or the use according to claim 3,
wherein the first curing agent is composed of a phenolic resin including a phenol skeleton having any one or both of an alkyl group having two or more carbon atoms and an alkoxy group having two or more carbon atoms.

5. The laminated core according to claim 1 or 4, the rotary electric machine according to claim 2 or 4, or the use according to claim 3 or 4,
wherein a total amount of the first curing agent and the second curing agent is 10 parts by mass or more and 155 parts by mass or less with respect to 100 parts by mass of the epoxy resin.

## Patentansprüche

1. Ein laminierter Kern,
wobei eine Mehrzahl von Elektrostahlblechen laminiert und zur Haftung miteinander gebracht sind,
wobei die Elektrostahlbleche eine Isolierbeschichtung auf einer Oberfläche umfassen,
wobei die Isolierbeschichtung eine Beschichtungszusammensetzung enthält, umfassend:
ein Epoxidharz;
ein erstes Härtungsmittel, bestehend aus einem Phenolharz, das ein Phenolgerüst mit einem oder beiden von einer Alkylgruppe und einer Alkoxygruppe beinhaltet; und
ein zweites Härtungsmittel aus einem oder mehreren, ausgewählt aus einem Phenol-Resol-Harz und einem Phenol-Novolak-Harz,
wobei eine Menge des ersten Härtungsmittels 5 Massenteile oder mehr und 150 Massenteile oder weniger, bezogen auf 100 Massenteile des Epoxidharzes, beträgt.

2. Eine sich drehende elektrische Maschine, umfassend:
den laminierten Kern nach Anspruch 1.

3. Verwendung einer Beschichtungszusammensetzung, umfassend:
ein Epoxidharz;
ein erstes Härtungsmittel, bestehend aus einem Phenolharz, das ein Phenolgerüst mit einem oder beiden von einer Alkylgruppe und einer Alkoxygruppe beinhaltet; und
ein zweites Härtungsmittel aus einem oder mehreren, ausgewählt aus einem Phenol-Resol-Harz und einem Phenol-Novolak-Harz,
wobei eine Menge des ersten Härtungsmittels 5 Massenteile oder mehr und 150 Massenteile oder weniger, bezogen auf 100 Massenteile des Epoxidharzes, beträgt,
zur Herstellung eines laminierten Kerns wie in Anspruch 1 definiert oder einer sich drehenden elektrischen Maschine wie in Anspruch 2 definiert.

4. Der laminierte Kern nach Anspruch 1, die sich drehende elektrische Maschine nach Anspruch 2 oder die Verwendung nach Anspruch 3,
wobei das erste Härtungsmittel aus einem Phenolharz besteht, das ein Phenolgerüst mit einem oder beiden von einer Alkylgruppe mit zwei oder mehr Kohlenstoffatomen und einer Alkoxygruppe mit zwei oder mehr Kohlenstoffatomen beinhaltet.

5. Der laminierte Kern nach Anspruch 1 oder 4, die sich drehende elektrische Maschine nach Anspruch 2 oder 4 oder die Verwendung nach Anspruch 3 oder 4,
wobei eine Gesamtmenge des ersten Härtungsmittels und des zweiten Härtungsmittels 10 Massenteile oder mehr und 155 Massenteile oder weniger, bezogen auf 100 Massenteile des Epoxidharzes, beträgt.

## Revendications

1. Noyau stratifié,
dans lequel une pluralité de tôles d'acier électrique sont stratifiées et amenées à adhérer les unes aux autres,
dans lequel les tôles d'acier électrique comprennent un revêtement isolant sur une surface,
dans lequel le revêtement isolant contient une composition de revêtement comprenant :
une résine époxy ;
un premier agent de durcissement composé d'une résine phénolique comprenant un squelette phénol ayant un quelconque parmi un groupe alkyle et un groupe alcoxy ou les deux ; et
un deuxième agent de durcissement d'un ou de plusieurs éléments choisis parmi une résine résol phénolique et une résine novolaque phénolique,
dans lequel une quantité du premier agent de durcissement est de 5 parties en masse ou plus et de 150 parties en masse ou moins par rapport à 100 parties en masse de la résine époxy.

2. Machine électrique rotative comprenant :
le noyau stratifié selon la revendication 1.

3. Utilisation d'une composition de revêtement comprenant :
une résine époxy ;
un premier agent de durcissement composé d'une résine phénolique comprenant un squelette phénol ayant un quelconque parmi un groupe alkyle et un groupe alcoxy ou les deux ; et
un deuxième agent de durcissement d'un ou de plusieurs éléments choisis parmi une résine résol phénolique et une résine novolaque phénolique,
dans laquelle une quantité du premier agent de durcissement est de 5 parties en masse ou plus et de 150 parties en masse ou moins par rapport à 100 parties en masse de la résine époxy,
pour la préparation d'un noyau stratifié tel que défini selon la revendication 1 ou d'une machine électrique rotative telle que définie selon la revendication 2.

4. Noyau stratifié selon la revendication 1, machine électrique rotative selon la revendication 2 ou utilisation selon la revendication 3,
dans lequel/laquelle le premier agent de durcissement est composé d'une résine phénolique comprenant un squelette phénol ayant un quelconque parmi un groupe alkyle ayant deux atomes de carbone ou plus et un groupe alcoxy ayant deux atomes de carbone ou plus, ou les deux.

5. Noyau stratifié selon la revendication 1 ou 4, machine électrique rotative selon la revendication 2 ou 4, ou utilisation selon la revendication 3 ou 4,
dans lequel/laquelle une quantité totale du premier agent de durcissement et du deuxième agent de durcissement est de 10 parties en masse ou plus et de 155 parties en masse ou moins par rapport à 100 parties en masse de la résine époxy.
